# EUROPEAN PATENT APPLICATION

(11) **EP 0 905 962 A1**
(43) Date of publication of application: **31.03.1999**
(21) Application number: 98118010.2
(22) Date of filing: 23.09.1998
(51) Int. Cl.: H04M 19/08, G07F 15/00

(54) **Automatic service station for cellular telephones**

(30) Priority: 30.09.1997 IT RE970070
(71) Applicant: Vittoria A.V.V., Oranjestad, Aruba (AN)
(72) Inventor: Raniolo, Giovanni, 16100 Genova (IT)
(74) Representative: Modiano, Guido, Dr.-Ing.

(57) **Abstract**

An automatic service station comprising an automatic vending machine the storage system whereof comprises one or more interactive drawers (10), each drawer being suitable to contain an entire telephone unit or a component thereof. The interactive drawers (10) have means (12) for input/output connection to the telephone or component and are inserted in one or more interactive recesses (20) provided with means for input/output connection to the drawers which are connected to the electronic management system of the station. A handling system is provided which is suitable to remove/insert the drawers from/into the recesses (20) and to handle them so as to make them available to the user and arrange them in the recesses (20); and an electronic system for the automatic management of the station, which is suitable to control the handling system so as to offer an interactive drawer (10) to the user, collect the drawer (10) together with the telephone unit or component thereof placed therein by the user, and is suitable to transfer data/power from and to the item placed in the drawer (10).

## Description

It is commonly known that the growing circulation of cellular telephones caused several drawbacks related to servicing, recharging and delivering a replacement unit to the users. In particular, these activities cannot be performed at any hour and the user is obliged to look for a retail dealer.

The aim of the present invention is to automate some services for users of cellular telephone units, particularly but not exclusively a service for collecting a malfunctioning unit and consequently delivering a replacement unit to the user and for recharging batteries, in order to allow to provide an unspecified number of sites where this service is performed automatically and which are furthermore active continuously twenty-four hours a day.

The automatic station according to the present invention further allows to provide other auxiliary services, such as for example acting as a telephone relay point, vending accessories, adding traffic vouchers to prepaid telephony service cards and other services.

This aim, these objects and others which will become apparent hereinafter are achieved by the present invention as defined in the appended claims.

The automatic service station according to the invention comprises an automatic vending machine provided with a storage system which comprises one or more interactive drawers, each of which is suitable to contain an entire telephone unit or its battery. The drawers have means for input/output connection to the telephone unit or component thereof.

One or more interactive recesses suitable to receive the interactive drawers are further provided which have means for input/output connection to the interactive drawers which are connected to the electronic management system of the station.

A handling system is also provided which is suitable to remove/insert the drawers from/into the recesses and handle them in order to make them available and arrange them in the recesses.

Finally, an electronic system is provided for the automatic management of the station which is suitable to control the handling system, so as to offer an interactive drawer to the user, collect the drawer together with the telephone unit or component thereof released therein by the user, and is suitable to transfer data/power from and to the item placed in the drawer.

The invention is described in detail hereinafter with the aid of the accompanying figures, illustrating a non-exclusive embodiment thereof:

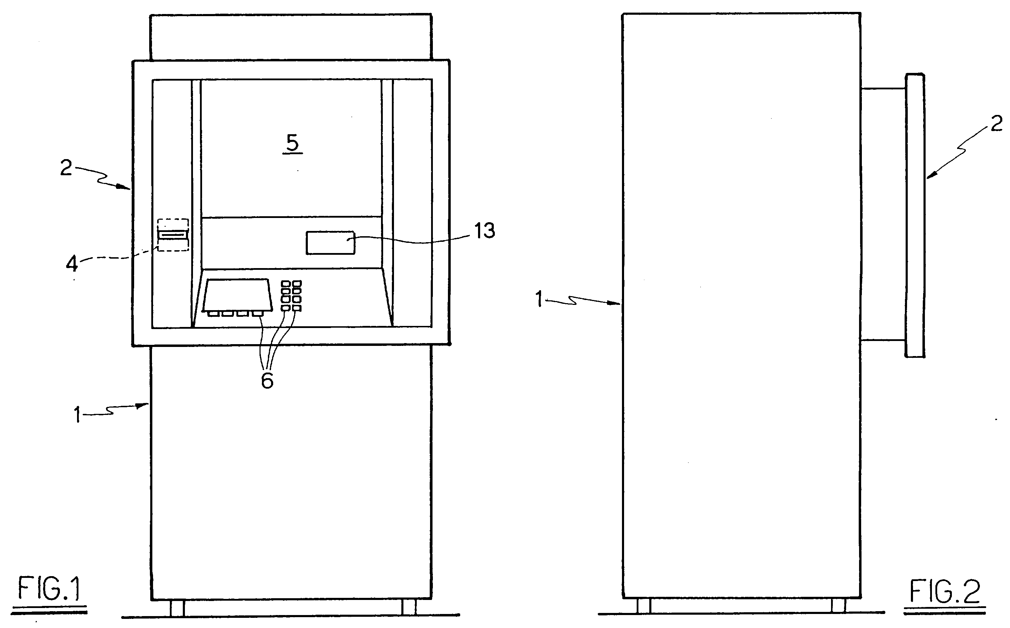

Figure 1 is a front view of the station according to the invention;
Figure 2 is a side view of the station of Figure 1;
Figure 3 is a schematic perspective view of an interactive drawer and of part of the interactive recesses suitable to receive it;

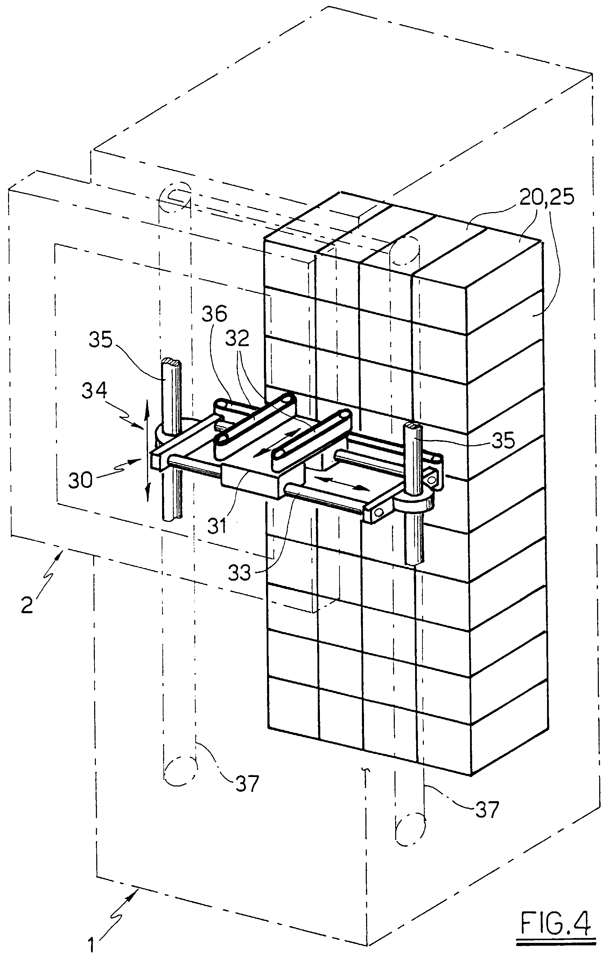

Figure 4 is a schematic perspective view of the means for handling the drawers;
Figure 5 is a block diagram of the electronic system for the management of the station.

The automatic station according to the invention (designated by the reference numeral 1 in the figures) substantially has the structure and the elements of a conventional automatic machine for collecting/distributing items such as videocassettes by means of movable drawers. Externally, the station is covered by conventional covering panels which give it a general prism-like shape, and a region 2 for interaction between the user and the station 1 is arranged on a front wall of the station.

The station 1 comprises a storage system having a plurality of interactive drawers 10, each of which is meant to contain, substantially to size, an entire cellular telephone unit or a component thereof (for example the battery). Each drawer 10 comprises means for input/output connection between the component or telephone and the elements, specified hereinafter, of the station.

In particular, each one of the interactive drawers 10 comprises a plurality of eight contact tracks 11 which are fitted on an outer face, for example the lower base of the drawer, and a connector means 12 for the I/O ports of the telephone unit or battery, which is connected to the contact tracks 11.

Preferably, another identical plurality of contact tracks 11, rotated through 180 degrees with respect to the previously-mentioned tracks, is provided in order to allow the drawer 10 to function even if it is turned around when inserted in the station 1.

The station 1 comprises an ordered plurality of interactive recesses 20 which are suitable to receive the drawers 10 snugly. Each recess has a corresponding plurality (eight) of contact tracks 21 which are suitable to couple to the contacts 11 of the interactive drawers 10 when the drawer is inserted in the recess.

The station comprises at least one door 13 which is arranged in the front region 2 for the insertion/extraction of the interactive drawers 10.

In addition to the interactive recesses 20, the station further comprises other recesses 25 which are suitable for other functions and which, together with the recesses 20, are arranged in an orderly manner and can be accessed by means of one or more vertical planar passages.

A handling system 30 is also arranged in the passages and can, on command, remove/insert the drawers 10 from and into the recesses 20, 25 and move them in order to make them available to the user by means of the door 13 and store them in the recesses 20, 25.

The station 1 also has an electronic system for automatic management which supervises and controls the activity of the station.

According to the invention, the station connects the telephone unit or component thereof to its electronic management system in order to exchange data or power with it. In particular, it first of all performs battery recharging and/or collects a malfunctioning telephone unit (which is subsequently collected by a suitable repair center) and simultaneously supplies the user with a replacement telephone unit.

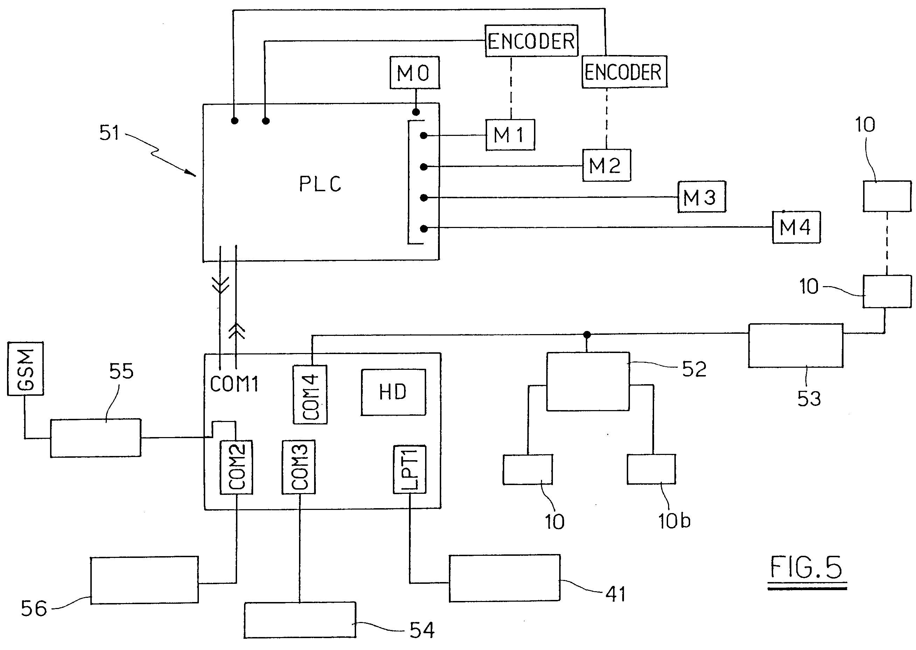

In order to recharge the batteries of telephone units, at least one electric circuit 52 (Figure 5) is provided which is suitable to supply recharging power for the batteries, is connected to the contact tracks of the interactive recesses 20 and is connected to the batteries arranged in the interactive drawers 10 when the drawers are arranged in the interactive recesses 20.

When, during operation, the user requires battery recharging, the electronic management system, by means of the handling system 30, first of all provides the user, through the insertion/extraction door 13, with an interactive drawer 10; after the user has placed the battery therein, connecting it to the connector means 12, the drawer 10 is placed in a recess 20 in which, through the coupling between the contacts 11-21, the battery is connected to the recharging circuit 53. Finally, when recharging has been completed, the drawer 10 with the recharged battery is again made available to the user through the door 13.

Two different operating methods are provided for the replacement of a malfunctioning telephone unit according to the type of malfunctioning telephone handed in by the user.

If the telephone unit is of the E-TACS type (analog type), there is a second plurality of interactive drawers 10b which are substantially identical to the first drawers 10 and contain telephone units which are suitable to replace the telephone units of the users. The drawers 10b therefore have means for input/output connection (the connector 12) for the replacement telephone unit and are placed in the interactive recesses 20, where they are connected thereto by means of the contacts 11-21. The electronic management system further comprises an electronic unit 52 (Figure 5) which is suitable to transfer data from the malfunctioning telephone units to the replacement telephone units and is connected to the connection means 21 of the interactive recesses 25.

When, during operation, the user requests replacement of an E-TACS telephone unit, the electronic management system, by means of the handling system 30, acts by first of all making an interactive drawer 10 available to the user through the insertion/extraction door 13. After the user has placed the malfunctioning telephone unit therein, connecting it to the drawer by virtue of the connector means 12, the drawer 10 is conveyed into a recess 20 in which, by means of the contacts 11-21, it is connected to the data transfer unit 52, which is simultaneously connected to a replacement telephone unit located in a second interactive drawer 10b. The transfer unit 52 then transfers the identification data of the malfunctioning telephone unit from the malfunctioning telephone unit to the replacement telephone unit, so as to allow the replacement telephone unit to operate as a replacement of the malfunctioning one. Thereafter, the drawer 10b with the replacement telephone unit is made available to the user through the door 13, while the malfunctioning telephone unit is withheld (to be subsequently delivered to a repair center).

If a malfunctioning telephone unit of the GSM type (digital type) is to be replaced, there is a plurality of other drawers 10d, particularly of the noninteractive type, which contain telephone units suitable to replace the telephone units of the users. In this case, the electronic management system, by means of the handling system 30, acts by first of all making a drawer 10d available to the user through the insertion/extraction door 13. After the user has placed the malfunctioning telephone unit in a drawer (which can be interactive or noninteractive), taking care to first remove the electronic identification card from the telephone unit, the drawer is moved to a store formed by a plurality of noninteractive recesses 25d. Simultaneously, a drawer 10d containing a similar replacement telephone unit (without a card, in the place of which the user inserts his own) is made available to the user through the door 13.

It is also possible to provide a printer 41 (Figure 5) which is connected to the electronic management system, which controls the handling system so as to take from the door 13 an interactive drawer containing a telephone unit and move it into an interactive recess 20, where it provides the input/output connection of the telephone unit to the printer 41 in order to print the data contained in the telephone unit, for example the data of the telephone directory, and then supply them to the user.

The same system described above for replacing E-TACS telephone units can be used in the case of GSM telephone units too. In this case, the malfunctioning telephone unit is placed by the user in an interactive drawer 10 which is moved to an interactive recess 20, where it is connected to the data transfer unit 52, which is in turn connected to a replacement telephone unit arranged in an interactive drawer 10b located in another interactive recess 25. In this case, the data transfer relates to auxiliary data, for example the content of the telephone directory, which is transferred from the malfunctioning telephone unit to the replacement telephone unit.

The station according to the invention can of course simultaneously comprise all of the above-described means to perform in each individual case all the described functions: battery recharging, replacement of E-TACS telephone units and replacement of GSM telephone units.

Accordingly, the station according to the invention comprises, in this case, interactive drawers 10 dedicated to receiving batteries; interactive drawers 10 dedicated to receiving malfunctioning telephone units (of the E-TACS or GSM types); interactive drawers 10b which initially contain replacement telephone units; noninteractive drawers 10d which initially contain replacement telephone units (of the GSM type); noninteractive drawers suitable to receive malfunctioning telephone units (of the GSM type); interactive recesses 20, 25 suitable to receive interactive drawers 10, 10b; and noninteractive recesses 25d suitable to receive noninteractive drawers 10d.

The set of interactive and noninteractive recesses is arranged in an orderly fashion on one or more vertical planes so as to form one or more planar vertical passages in which the means of the handling system 30 move.

Such means are substantially of the known type for handling drawers in other kinds of vending machine (for example in videocassette vending machines).

In summary, the means 30 comprise a carriage 31 which supports two sets of mutually opposite motorized belts 32 which are suitable to grip a drawer 10 (10b, 10d) and to move it horizontally and parallel to the horizontal axis that lies at right angles to the front wall. The carriage 31 can slide along two horizontal guides 33 which are parallel to the horizontal axis that lies at right angles to the first axis. The two guides 33 are supported by a movable frame 34 which can slide along two fixed vertical guides 35.

The movement of the drawer in a direction which is parallel to the first horizontal axis is achieved through the action of the belts 32, so as to perform the extraction and insertion of a drawer in a recess 20 (25, 25d); movement in a direction which is parallel to the second horizontal axis is achieved by means of a motorized driving belt 36 which produces movement along the guides 33; vertical movement is achieved by means of vertical motorized belts 37 which produce movement along the guides 35.

By means of the system 30 it is possible to move the drawers from any recess to any other recess and to the door 13 and viceversa.

In practical execution, the means 30 are moved with the aid of DC motors controlled by means of an encoder. The correct positioning of the carriage 31 with respect to the movement axes is ensured by optical encoders.

The door 13 is closed by a flap whose opening is controlled by a motor.

The handling of the drawers is controlled by means of a logic management means (of the PLC type), which is in turn controlled by the electronic management system of the station. The PLC fully supervises the positioning of the carriage 31 and checks in real time the state of the sensors arranged on the machine for managing the movements and/or any error conditions.

Two optical sensors check for the presence or absence of the drawer between the belts 32. Other sensors are arranged as limit switches at the ends of the vertical guides 35.

In particular, according to the embodiment shown in Figure 5, the management system comprises a PC-type computer, designated by the reference numeral 50, which supervises the management aspect and is interfaced with the PLC, designated by the reference numeral 51, which manages the handling system.

The various motors M0, M1, M2, M3 and M4 relating to the handling of the drawers and of the flap of the door 13 are connected to the PLC.

The unit 52 for transferring data from the malfunctioning telephones to the replacement telephones is connected to the PC-type computer; the interactive drawers 10 and 10b arranged in the respective interactive recesses are connected to the unit 52.

The circuit 53 for recharging the batteries placed in the interactive drawers 10 arranged in the respective interactive recesses is also connected to the PC-type computer.

A reader 54 for magnetic cards which the user must insert before any operation is also connected to the PC-type computer. The magnetic card can be a specific card issued to individuals who register for use of the service station according to the invention, or can be a conventional ATM card or a credit card or a tax ID card.

The reader 4 controls the beginning of the operation of the station. Next to the reader 4, in the region 2, a screen 5 is also provided for dialog with the user, as well as entry keys 6 for commands related to the services and for the entry of the data requested by the station to the user, particularly for the entry of data regarding the telephone or battery to be replaced/recharged and to request the required services.

The station is furthermore advantageously connected to a remotely located control unit by means of a modem 55 and automatically reports to the control unit the data related to its activity, particularly data regarding the received malfunctioning telephone units.

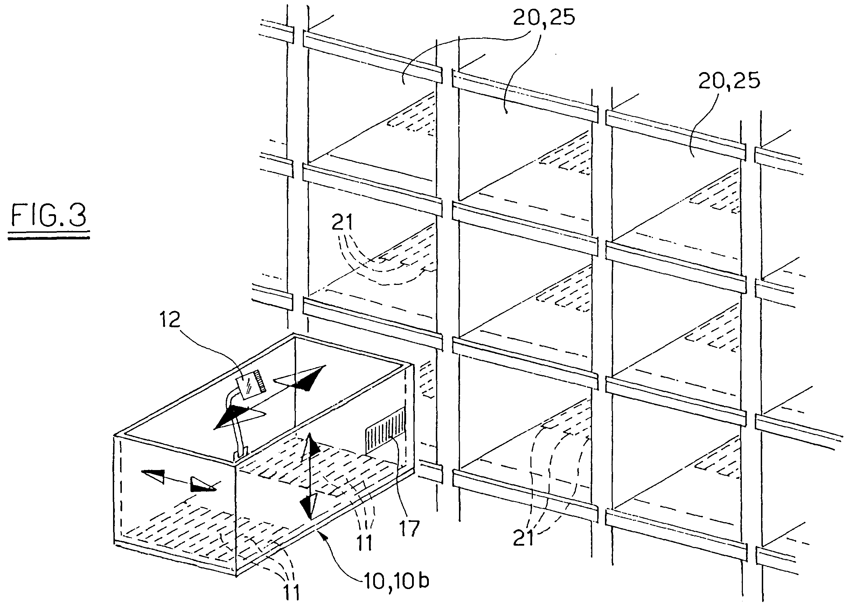

Finally, a bar code reader 56 is connected to the PC-type computer for reading a personal code 17 (Figure 3) provided on each drawer for managing the movements of the drawers. The station is advantageously suitable to also perform other services in addition to those described, using some of the described elements.

For example, it is particularly advantageously suitable for vending components and accessories for cellular telephone units, for example batteries, in-car charger cables, cases, and other items.

In this case, such accessories and components are preloaded in noninteractive drawers (such as the drawers 10d, which contain replacement GSM telephone units) arranged within noninteractive recesses. Said drawers are moved on command to the insertion/extraction door 13, where they make the contained accessory or component available to the user. A dynamic storage system is thus provided which is capable of automatically meeting requests and can also automatically transmit the data required for storage system management via modem to the control unit.

It is also possible to associate with the station other auxiliary services which use the telephone link with which the station can be equipped to report data to the control unit. For example, a service for adding traffic vouchers to telephony payment cards and other services.

The present invention is of course susceptible of numerous practical and applicative modifications without thereby abandoning the scope of the inventive concept as claimed hereafter.

The disclosures in Italian Patent Application No. RE97A000070 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An automatic service station for cellular telephony, characterized in that it comprises:
-- an automatic vending machine, having a storage system provided with one or more interactive drawers, each whereof is suitable to contain a telephone unit or a component thereof, said interactive drawers having means for input/output connection to the telephone unit or component;
-- one or more interactive recesses which are suitable to receive said interactive drawers and are provided with means for input/output connection to the interactive drawers;
-- a handling system which is suitable to remove/insert the drawers from/into said recesses and move them so as to make them available to the user and arrange them in the recesses;
-- an electronic system for the automatic management of the station, connected to said connection means, and suitable to control said handling system so as to offer an interactive drawer to the user, collect the drawer together with the telephone or component thereof placed therein by the user, and is suitable to transfer information/power from and to the item placed in the drawer.

2. The automatic station according to claim 1, characterized in that each one of the interactive drawers comprises at least one plurality of contact tracks fitted on an outer face of the drawer and a connector means for the I/O ports of the telephone unit or component, which is connected to the contact tracks, and in that each one of said interactive recesses, suitable to receive said drawers, comprises a corresponding plurality of contact tracks which are suitable to couple to the contacts of the interactive drawers when the drawer is inserted in the recess, said interactive recesses being connected to the electronic system for the automatic management of the station.

3. The automatic station according to claim 1, characterized in that it comprises:
-- at least one door for inserting/removing the interactive drawers;
-- a plurality of interactive or noninteractive recesses which are suitable to contain interactive or noninteractive drawers, said recesses being ordered and accessible by means of one or more vertical planar passages;
and in that the handling system comprises means which are movable in said passages and are suitable to remove/insert the drawers from and in said recesses on command, to handle them so as to make them available to the user by means of the insertion/removal door and to arrange them in the recesses of the automatic vending machine.

4. The automatic station according to claim 3, characterized in that it comprises:
-- a plurality of second interactive drawers containing telephone units which are suitable to replace the telephone units of users, provided with means for input/output connection to the replacement telephone unit, placed in said interactive recesses and connected thereto;
-- an electronic unit which is part of the electronic management system and is suitable to transfer data from the malfunctioning telephone units to the replacement telephone units and is connected to said interactive recesses; and in that the electronic system for the automatic management of the station controls the handling system, so as to take from the insertion/extraction door an interactive drawer which contains a malfunctioning telephone unit and move it into an interactive recess, where input/output connection is provided between said telephone unit and a replacement telephone unit arranged in a second interactive drawer, which is in turn arranged in an interactive recess, activates the data transfer unit and finally makes the drawer with the replacement telephone unit available to the user.

5. The automatic station according to claim 3, characterized in that it comprises an electric circuit which is suitable to supply recharging power for batteries of telephone units and is suitable to be connected to said interactive drawers which contain a battery, and in that the electronic system for the automatic management of the station controls the handling system so as to take from the at least one door an interactive drawer which contains a battery and connect it to the recharging circuit, and finally makes the drawer with the recharged battery available to the user.

6. The automatic station according to claim 3, characterized in that the electronic system for the automatic management of the station controls the handling system so as to take from the at least one door an interactive drawer which contains a telephone unit and place it within an interactive recess, where it provides the input/output connection of said telephone unit with a printer in order to print data stored in the telephone unit.

7. The automatic station according to claim 1, characterized in that it comprises a plurality of further drawers which contain telephone units suitable to replace the telephone units of the users, the electronic system for the automatic management of the station making said further drawers available to the user in exchange for a telephone unit placed by the user in said interactive drawer.
